(19) Europäisches Patentamt
European Patent Office
Office européen des brevets

(11) **EP 3 134 028 B1**

(12) **EUROPEAN PATENT SPECIFICATION**

(45) Date of publication and mention
of the grant of the patent:
**02.08.2017  Bulletin 2017/31**

(51) Int Cl.:
***A61C 13/15*** (2006.01)   ***G02B 3/04*** (2006.01)

(21) Application number: **15718741.0**

(22) Date of filing: **16.04.2015**

(86) International application number:
**PCT/US2015/026154**

(87) International publication number:
**WO 2015/164180 (29.10.2015 Gazette 2015/43)**

(54) **A DENTAL LIGHT IRRADIATION DEVICE**

ZAHNÄRZTLICHE LICHTBESTRAHLUNGSVORRICHTUNG

DISPOSITIF D'IRRADIATION DE LUMIÈRE DENTAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.04.2014  EP 14165892**

(43) Date of publication of application:
**01.03.2017  Bulletin 2017/09**

(73) Proprietor: **3M Innovative Properties Company**
**St. Paul, MN 55133-3427 (US)**

(72) Inventors:
• **WELKER, Stefan K.**
  **82229 Seefeld (DE)**
• **YUN, Zhisheng**
  **Saint Paul, MN 55133-3427 (US)**
• **SCHMID, Rudolf**
  **82229 Seefeld (DE)**
• **SCHEPKE-GERLACH, Korbinian**
  **82229 Seefeld (DE)**

(74) Representative: **Hohmann, Arno**
**3M Deutschland GmbH**
**Office of Intellectual Property Counsel**
**Espe Platz**
**82229 Seefeld (DE)**

(56) References cited:
**EP-A1- 1 457 169**     **JP-A- 2008 228 770**
**US-A1- 2002 151 941**   **US-A1- 2003 215 766**
**US-A1- 2004 248 059**

## Description

Field of the Invention

The invention relates to a dental light irradiation device, and in particular to a dental light irradiation device which is adapted for emitting light in a working area at a light intensity distribution within a pre-determined minimized range.

Background Art

Light-curable or light-hardenable materials are widely used in dentistry for the restoration of teeth, for example for filling a cavity in a tooth. Such materials typically can be made to provide optical characteristics that resemble those of natural teeth, which makes those materials a favored alternative to unpleasant looking amalgam materials, for example.

Light-hardenable materials often include a polymerizable matrix material and filler materials including colorants, and may initially be generally soft or flowable so that they can be applied in a desired location and shape. For example, for restoration of a tooth the dental material may be filled into a tooth cavity and shaped so that the restored tooth resembles a natural tooth. Once the desired shape has been formed, the material may be hardened by exposing it to light of a desired wavelength and for a certain material dependent time period. The light typically activates photoinitiators in the dental material that cause the matrix material to polymerize.

The use of dental materials that are hardenable by blue light of a wavelength of between about 450 and 500 nm has become common in dentistry. Accordingly, dental light irradiation devices used for hardening such dental materials typically emit light at such wavelengths and typically enable the device to automatically control the light emission for only a pre-selected or pre-selectable time period. Such dental light irradiation device, for example, is available from 3M ESPE, Germany, under the trade designation Elipar™ S10 LED Curing Light.

Normally irradiating a dental material causes that portion of the dental material to harden, which is exposed to sufficiently intense light emitted from the device. Very small amounts of dental material typically can be hardened by activating the device once for the desired preselected operating time period. However for filling larger cavities in a tooth typically the dental material is provided in several portions and hardened successively. Further to harden larger amounts of the dental material the light device must be repositioned one or several times to make sure all relevant portions of the dental material get exposed to light. It has been found that such repositioning may be performed by some dental practitioners during operation of the device at the pre-selected operating time period. This may however cause each of the different portions of the dental material to get exposed to the light for a shorter time than pre-selected. This may further result in insufficient hardening of the dental material and thus to an insufficient durable dental filling. Otherwise some dental practitioners may perform repositioning with operation of the device several times at the preselected operating time period on each position. This may however cause the dental material to heat up and cause postoperative diseases for the patient. Further this may cause the dental material to overharden and to become brittle. Although dental practitioners are generally skilled to control a dental light device to harden even larger fillings appropriately, there is a relatively high dependency between, on the one hand, the quality of the filling and the patient comfort and, on the other hand, the dental practitioner's way of handling the dental light irradiation device.

For example, EP 1 457 169 A1 discloses A photoirradiation device having a first lens and a second lens which share refraction of light to convert light beams emitted from a plurality of light sources into light beams substantially parallel to an optical axis. A third lens focuses the light beams from the second lens on an incident surface of a lightguide. A fibre rod which can output uniform light beams includes a first rod having a single fibre and a second rod having a plurality of fibers.

Further, US 2004/0248059 A1 discloses a medical irradiation apparatus comprising a main body, a luminous body comprised of a light emitting element provided in a light outlet of the main body, an annular reflective member with a reflective surface provided at the circumference of the luminous body, the reflective surface reflecting the light from the luminous body forward, and a lens member provided so as to cover a forward opening of the reflective member, the lens member refracting and transmitting the direct light from the luminous body and the light reflected from the reflective member. According to the apparatus, all the outgoing light from the lens member is emitted so as to direct into a specified irradiation area.

Typically devices of the prior art can operate at different operation times and/or at different intensities to control appropriate hardening of the dental material. Thus too long or too short exposure of dental can typically be controlled. However there is still a need for a device which minimizes the dependency between quality of the filling and handling of the device. Further it is still desirable to provide a device that allows easy handling for appropriately hardening dental materials in different situations.

Summary of the Invention

The invention relates to a dental light irradiation device which is adapted to emit blue light. For the purpose of the present specification "blue light" refers to light having a wavelength within a range of about 430 nm (nanometers) and about 490 nm and a peak wavelength within a range of about 444 nm and 453 nm. Further such blue light preferably substantially does not comprise light at wavelengths outside the range of about 430 nm and about 490 nm. For example at least 90%, more preferably 95% of the light quantity emitted from the device is formed by blue light having a wavelength within a range of about 430 nm and about 490 nm.

The device of the invention comprises a light source and means for collimating light emitted from the light source. The light collimating means comprises a (preferably a single or only one) plano-convex lens. Such a plano-convex lens has a convex side and an opposite planar side. The plano-convex lens is oriented with the planar side toward the light source. The light collimating means comprises further a reflector. The reflector is formed by a hollow ring-shaped structure having an inner conical and reflective surface. Hence, the reflector operates based on surface reflection as opposed to total reflection. Thus, losses of light may be minimized.

The reflector of the device is arranged such that its inner cross-section widens toward the lens. Further, the reflector extends over the entire distance between the planar side of the lens and the light source. The light source is positioned substantially at (or at) the effective focal length of the lens. The device further comprises a light guide. The light guide has an input side for receiving light emitted from the light source and an output side for the light. Further, the device has a reflective tube. The reflective tube is arranged between the light collimating means and the light guide.

In other words the device of the invention may be described as a device which comprises a light source, means for collimating light emitted from the light source, and a light guide. The light guide has an input side for receiving light that is emitted from the light source, and an output side for the light. Preferably the light guide is arranged or adapted for being arranged in the device such that the input side of the light guide faces the light collimating means with the light collimating means being arranged between the light source and the light guide.

The output side has:

- a total area from which light is emitted,
- a reference area being virtually defined by an inscribed first circle within the total area and
- a smaller working area being virtually defined by a second circle concentrically arranged within the first circle,
- wherein the diameter of the second circle is 80% of the diameter of the first circle, and
- wherein a first circle axis being virtually defined through the center of the first and second circle and within the plane of the first and second circle and
- a second circle axis being virtually defined through the center of the first and second circle and within the same plane, with the second circle axis being arranged perpendicular to the first circle axis.

The device is adapted such that light emitted from the output side exhibits a first light intensity profile determined across the first circle axis within the first circle. The first light intensity profile exhibits at least one first light intensity maximum. Further the light source, the light collimating means and the light guide each are configured and (in combination are) arranged for cooperation such that the first light intensity profile within the second circle ranges within limits of 70% and 100% of the first light intensity maximum. The light source, the light collimating means and the light guide each may be configured and arranged for cooperation such that the first light intensity profile within the second circle ranges within limits of 72% and 100%, more preferably within limits of 74% and 100% and most preferably within limits of 76% and 100% of the first light intensity maximum.

In one embodiment the light collimating means consists only of the single plano-convex lens and the reflector. The device is advantageous in that it helps maximizing the reliability of light-hardening of a dental light-hardenable material in a patient's mouth. Other than prior art devices which aim for maximizing the light intensity by focusing light toward a small area, the device of the present invention implements optics which collimates diverging light toward parallel light. It has been found that the accuracy of positioning the device of the invention relative to the material to be hardened is less critical compared to prior art devices, based on a similar quality of the hardened dental material. In other words although some prior art devices allow for hardening of dental materials at superb quality if positioned accurately, the same result can be achieved with the device of the invention if positioned at higher positioning tolerances. In an embodiment the output side is formed by a planar or generally planar end face of the light guide.

In a further embodiment the device is adapted such that light emitted from the output side exhibits a second light intensity profile determined across the second circle axis within the first circle. In that embodiment also the second light intensity profile exhibits at least one second light intensity maximum. Further the light source, the light collimating means and the light guide each are configured and (in combination are) arranged for cooperation such that the second light intensity profile within the second circle ranges within limits of 70% and 100% of the second light intensity maximum. The light source, the light collimating means and the light guide each may be configured and arranged for cooperation such that the second light intensity profile within the second circle ranges within limits of 72% and 100%, more preferably within limits of 74% and 100% and most preferably within limits of 76% and 100% of the second light intensity maximum.

In a further embodiment the light source is a blue LED (Light Emitting Diode) or a blue laser diode. The light source may be formed by a single high-power LED having an input power of between 6 W to 12 W and an optical output power of between about 1 W to about 3 W, preferably at least about 1.12 W. Further the light source may essentially form a point source. Such a point source in practice may have an irradiating area. Such irradiating area may not be greater than 20 mm$^2$, for example between 2 mm$^2$ and 3 mm$^2$ and in particular about 2.25 mm$^2$. The irradiating area as specified herein refers to a two-dimensional planar area being generally equally sized in both dimensions, like for example a generally circular or square-shaped area. The light collimating means are preferably adapted and arranged relative to the light source to collimate light into a substantially parallel light beam. The skilled person will be able to select appropriate combinations of a light collimating means and a light source depending on the angle of radiation of the light source, the collimating characteristics of the light collimating means and the distance between the light source and the light collimating means.

In one embodiment the light source may comprise a lens. For example an overmold of the LED may be shaped to define a lens. Such a lens typically forms an integral and inseparable component of the light source. "Inseparable" for the purpose of the present specification refers to components (for example the lens and the remainder of the light source) which cannot separated from each other without damaging one or the other component, or without affecting one or the other component in its principle nature.

In one embodiment the convex side of the lens is aspherical. The lens may have an anti-reflection-coating. Thus the quantity of light transmittable through the lens may be maximized. In a further preferred embodiment the reflective surface of the reflector is metal coated (for example aluminum coated). The reflector may further be made of metal, with the reflective surface being formed by the metal which the reflector is made of. The reflective surface of the reflector may for example by by provided by a diamond turned surface.

In one preferred embodiment the center of the light source is positioned at (or substantially at) the effective focal length of the (plano-convex) lens. In other words the light source is positioned with its center offset from the so-called "rear principle plane" of the (plano-convex) lens by the effective focal length. In a (plano-convex) lens that has two principle planes the "rear principle plane" refers to the principle plane which is located closer to the light source. It was found that a device implementing such a configuration (comprising the reflector and the lens) provides a more uniform light intensity profile of the light output than the same device in which the light source is positioned outside the effective focal length of the lens. Further such a configuration provides an excellent balance between high light intensity and uniform light distribution.

In one embodiment the reflective tube has a cylindrical inner reflective shape. The reflective tube helps capturing any light that is unintentionally diffused in the light collimating means and/or by the light source, for example from inaccuracies or slight impurities in the light collimating means, the light source and/or the materials these components are made of. It was found the reflective tube helps maximizing the uniformity of the light beam profile and light intensity.

In one embodiment the device has a housing which is closed by a transparent closure. Preferably the light source is encapsulated, preferably hermetically encapsulated, in the housing. The device is preferably adapted for detachably attaching the light guide. In particular the housing may have a mouth-piece for detachably attaching the light guide thereon. An end face of the mouth-piece preferably comprises the closure. Thus, the light guide can be detached for cleaning and/or disinfection and re-attached after. Further the device may be adapted such that the attached light guide is rotatable relative to the device. In particular the mouth-piece may be cylindrical. Thus, the light guide may be positioned relative to the housing of the device by a user.

The reflective tube of the device preferably extends along the entire distance between the convex side of the lens and the closure. Accordingly, the closure, the reflective tube, the lens and the reflector are preferably in direct contact with each other.

In a further embodiment the input side of the light guide is arranged adjacent or in contact with the closure. Thus, the light guide is optically coupled with the light source via the closure, the reflective tube, the lens and the reflector.

In one embodiment the light guide and the housing are attachable with each other by a magnetic coupling. Thus the light guide and the housing may be easily detached and re-attached by a user.

In a further embodiment the housing of the device further hermetically encapsulates a battery for powering the light source and a control unit for operating the light source for a pre-selectable operating time and for automatically deactivating the light source upon lapse of the operating time. The housing may have contacts for connecting the device with a charger for charging the battery. Alternatively the housing may further encapsulate a coil for coupling with a charger in a contactless manner.

In one embodiment the light guide extends at least partially at a generally rectangular cross-section. For example at least the light output may have a rectangular shape to approximately match with the shape on a human molar tooth. This may provide guidance to a user for appropriately positioning the light output to a tooth filled with a light hardenable dental material. Therefore this embodiment may help further maximizing the reliability of light-hardening of a dental light-hardenable material.

In one embodiment the lens has a thickness in a dimension between the convex and the planar side of 5.8 mm $\pm$ 0.1 mm, and a diameter in a dimension perpendicular to the thickness of 10 mm - 0.1 mm. Further, the profile of the aspheric side of the lens may be characterized by R = 4.18464 mm; k = -0.602689; $A_4$ = 0.00022; according to the formula:

$$z(r) = \frac{r^2}{R\left(1 + \sqrt{1 - (1+k)\left(\frac{r}{R}\right)^2}\right)} + A_4 r^4$$

In the formula r refers to a radius of the lens and ranges from r = 0 mm to r = 5 mm.

Brief Description of the Figures

Fig. 1      is a perspective view of a device according to an embodiment of the invention;

Fig. 2      is a cross-sectional partial view of the device shown in Fig. 1;

Fig. 3      is a sketch illustrating certain virtual geometries as used as a basis for determining a light intensity profile of a light device in a standardized manner;

Fig. 4      is a diagram illustrating light intensity profiles of a device according to the prior art;

Fig. 5      is a diagram illustrating light intensity profiles of a device according to the invention;

Fig. 6      is a photo of a calibrator for measuring a light intensity emitted from a light device;

Fig. 7      is a diagram illustrating curves of a light intensity measured from a light device according to the prior art versus a light device according to the invention;

Fig. 8      is a perspective view of a light guide as it may be used in a device according to an embodiment of the invention;

Fig. 9      is a cross-sectional view of a light guide as it may be used in a device according to an embodiment of the invention;

Fig. 10      is a cross-sectional view of a further light guide as it may be used in a device according to an embodiment of the invention; and

Fig. 11      is a cross-sectional drawing of a portion of a device according to an embodiment of the invention.

Detailed Description of the Invention

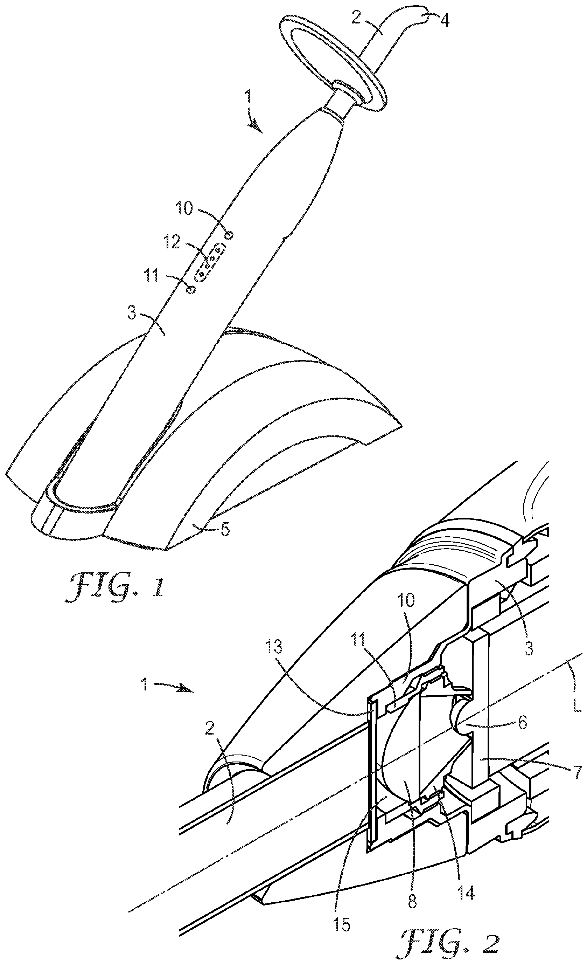

Fig. 1 shows an exemplary dental light irradiation device 1. The device 1 has a housing 3, and a light guide 2 with a light output 4. The dental light irradiation device 1 of the example is removably placed in a base 5. The device 1 is battery powered and therefore separable from the base 5 without the need of a permanent wired connection between the device 1 and the base 5. The base 5 has a power supply for charging the device 1 when the device is placed in the base 5. Such a power supply may comprise physical electric contacts for contacting corresponding contacts of the device 1, or an induction coupling for coupling with a corresponding induction coupling in the device 1. The exemplary dental light irradiation device 1 further has two buttons, an on/off button 10 and a selector button 11. The selector button 11 is typically used to pre-select a time period for which the device operates as soon as it is switched on via the on/off button 10. Therefore the device 1 can be used with different dental materials and for different applications, for example for hardening layers of dental materials having different thicknesses. The on/off button 10 is typically used to switch on the device so that it operates for the time-period pre-selected by the user, and automatically switches off after. However, the device may also be switched off by pushing the on/off button at any time before the pre-selected time period has lapsed. In the device 1 shown in Fig. 1 the selector button 11 typically allows the user to pre-select between different default time periods. For example, each push on the selector button 11 may increase the operating time period by a certain time unit. Upon reaching an available maximum a further push on the selector button 11 resets the time period to a minimum again. Thus, a user can pre-select a certain time period (indicated on the device by LEDs 12) by pushing the button as often as required.

In practice the user, typically a dentist, dispenses a dental material to a desired place, for example to a tooth in a patient's mouth. The dentist then normally pre-selects the operating time period according to the dental material used and dependent on the application characteristics of the material, and presses the selector 11 accordingly. For example, the dentist may use different operating time periods for hardening filling materials than for hardening coatings. Other factors are typically also considered by the dentist such as material thicknesses, or the location of the material (deep in a cavity or at a tooth surface, for example). For hardening the dental material the dentist typically positions the light output 4 of the device 1 close to the dental material and activates the device 1 by the activator 10. Accordingly the device emits light through the light output 4 for the pre-selected operating time period.

Fig. 2 is a cross-sectional view through a portion of the device 1. The device 1 has a light source 6 and a plano-convex lens 8. The light source 6 and the lens 8 are spaced at a predetermined distance from each other. A space is formed between the light source 6 and the lens 8, in which preferably no solid structure, like for example glass or plastic, is present. A reflector 14 is arranged between the lens 8 and the light source 6. The reflector 14 extends along a longitudinal axis L at a circular cross-section and forms a funnel-shaped (conical) inner reflective surface. The term "reflective surface" as used for the purpose of the present specification encompasses a reflective surface which is coated by an optically clear material and thus does not form an outermost surface. The reflector 14 is arranged such that its inner cross-section widens toward the lens 8. In the example the reflector widens at an angle of 50 degrees, measured in a plane through the longitudinal axis L between opposite sides of the reflective surface (25 degrees toward opposite sides of the longitudinal axis L). Further the reflector extends over the entire distance between the planar side of the lens 8 and the light source 6. The reflector 14 in the example is made of aluminum (AlMgSi1, AW-6082) and inwardly has a diamond turned surface which is coated by a chromium nitride coating. It has been found that with such a coating the reflectivity of the reflector can be maintained at a high level over a relatively long time period. A lens holder 11 is arranged in the device for positioning the lens 8 relative to the light source 6. In the example the lens holder 11 is formed by an insert threadably received in a mouth-piece 10 of the housing 3. However in an alternative example the lens holder may be formed by the mouth-piece 10, for example. The lens holder 11 has a through-hole having stepped configuration. In particular the through-hole formed by the lens holder 11 has a first diameter adjacent the light source 6 and a smaller second diameter farther away from the light source. The step formed by the transition between the first and second diameters of the through-hole forms a positioning stop for the lens 8. The reflector 14 is screwed within the lens holder 11 in the area of the first diameter and secures the lens 8 at the positioning stop. The housing 3 of the device 1 is closed by a transparent closure 13, for example a glass or plastic plate having two opposite parallel planar surfaces. Accordingly the light source 6, the reflector 14 and the lens 8 are encapsulated between the housing 3 and the closure 13. The closure 13 has an antireflection coating on both sides, optimized for light of wavelengths between about 400 nm and about 700 nm, to maximize the transmission through the closure 13. In the example the coating provides a remaining reflection of less than 0.5 %. The skilled person will recognize other possibilities for securing the lens within the device 1, for example by gluing, ultrasonic welding or by securing by one or more screws arranged radially about the longitudinal axis L within the lens holder 11 around the lens 8. The device 1 in the example further has a reflective tube 15 which has an inner generally cylindrical reflective surface. The reflective tube extends along the entire distance between the convex side of the lens 8 and the transparent closure 13. It has been found that the reflective tube helps maximizing the uniformity of the light beam profile. The reflective tube 15 is however optional.

The lens 8 acts as a condenser lens which collimates light emitted from the light source 6 toward substantial parallel light. In the example the lens 8 and the reflector 14 in combination form light collimation means which convert light emitted from the light source in generally parallel light, although the light source 6 is positioned outside the focal distance of the lens 8. Thus, more generally, the light source 6, the lens 8 and the reflector 14 are configured and arranged relative to each other to, in combination, emit generally parallel light. This is in contrast to prior art, in which light devices have means for collimating light to maximize light efficiency. Some of such prior art light devices typically have reflectors for capturing generally all of the light emitted from the light source and for reflecting the captured light into the light guide at non-uniform orientations. Other of such prior art devices use collimators for focusing light, for example toward a point or small area, to maximize light efficiency.

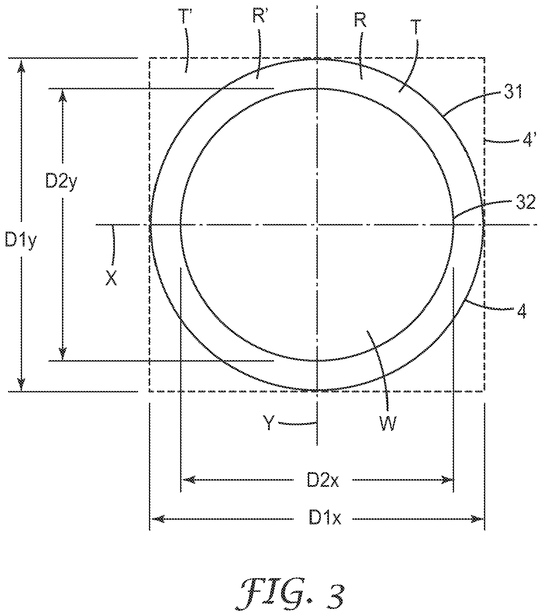

Fig. 3 illustrates the light output 4 of the device 1 (for example as shown in Fig. 1) in more detail. In the example the light output 4 is formed by the end of a light guide that extends along a circular cross-section. The light guide may for example be formed by a generally cylindrical structure, or a bent or curved cylinder. The light guide may by formed by a plurality or a bundle of glass fibers which are connected to each other. In another example indicated in dotted lines a light output 4' may be formed by the end of a light guide that extends along or end in a rectangular cross-section. More generally the light output may have an outer circular or rectangular cross-section. Differently shaped cross-sections are possible. The outer cross-section preferably forms a total area of the light output from which light can be emitted. Although not preferred the light output may be partially masked, for example by a light blocking coating. In such case the total area corresponds to unmasked areas from which light can be emitted.

Regardless of the shape of the cross-section of the light output, for the purpose of the present invention - particularly for determining properties of the light emitted from the light output - certain virtual geometries are assigned to the geometry of the light output, as further explained in more detail in the following:

In the example the light output is formed by a light guide having a circular cross-section. A virtual reference area R is defined by an inscribed virtual first circle 31 within the total area T of the light output 4. In the present example, because the light guide has a circular cross-section, the inscribed first circle 31 corresponds to the physical shape of the light output's cross-section. Accordingly in this example the total area T and the reference area R are identical. In the other example in which the cross-section of the light output 4' is rectangular (dotted lines) the total area T' is greater than the reference area R'. However the reference areas R and R' are identical. Accordingly the reference area R or R' can be used as reference independent from the shape of the light output.

Concentric within the first circle 31 a further virtual second circle 32 is defined. The second circle defines a working area for the purpose of the present invention only. The second circle has a diameter which is dimensioned 80% of the diameter of the first circle. For example a circular light output having a diameter of 10 mm has a first circle of a diameter of 10 mm and a second circle having a diameter of 8 mm. Further a virtual first circle axis X and a virtual second circle axis Y are assigned to the first and second circle 31, 32. The first and second circle axes X, Y are perpendicular center axes of the first and second circle 31, 32 and thus arranged in the same plane with the first and second circle 31, 32.

The virtual geometries, in particular the first and second circle 31, 32 and the first and second circle axis X, Y, may be used for determining a first and second light intensity profile of any light emitted from the light output. In more particular a first light intensity profile may be measured across the first circle axis X within the first circle 31. Such a first light intensity profile (not illustrated in this view) has a first width D1x as indicated in the Figure. A second light intensity profile may further be measured across the second circle axis Y within the first circle 31. The second light intensity profile (not illustrated in this view) has a second width D1y as indicated in the Figure. The second circle 32 determines 80% ranges designated as widths D2x, D2y centrically arranged within the widths D1x, D1y, respectively.

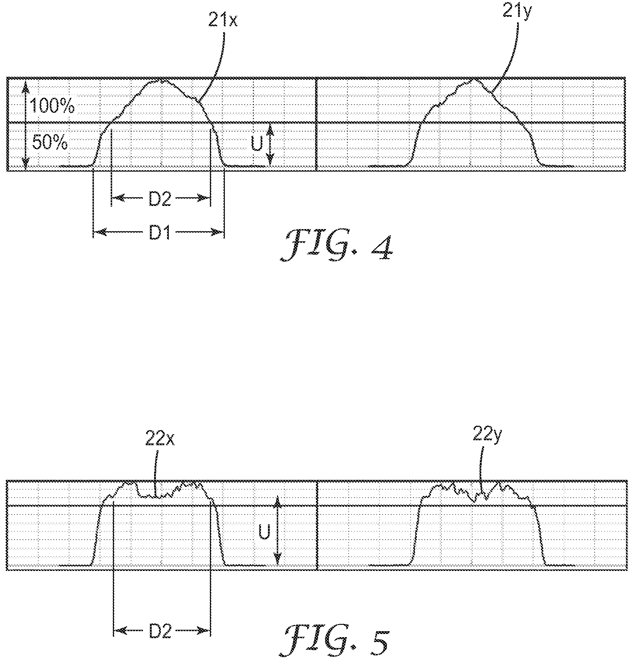

Fig. 4 illustrates a diagram representing the light intensity determined in the first circle of the light output (see Fig. 3) of a device of the prior art. The device of the prior art used was an Elipar™ S10 LED Curing Light as it is commercially available from 3M Deutschland GmbH. The diameter of the first circle was 8.8 mm. On the left in the diagram a first intensity profile 21x is shown which was measured along the first axis of the light output, whereas a second intensity profile 21y is shown on the right which was measured along the second axis of the light output. Both, the first and second intensity profile 21x, 21y have a first and second intensity maximum, respectively, in about the middle of the respective profile. The first and second intensity maximum may have different absolute values, but are standardized in the diagram to 100%. As shown the first and second intensity profile 21x, 21y within the second circle (80% diameter of the first circle) each range within limits of 50% and 100% of the first and/or second light intensity maximum. Accordingly the light emitted from the prior art device is focused toward a middle of the light beam and thus provides a relatively high light intensity in the middle of the light beam. However the light intensity drops relatively rapidly toward margins of the light output.

Fig. 5 in contrast shows a diagram representing the light intensity determined in the first circle of the light output (see Fig. 3) of a device of the invention. In this example the first and second intensity profile 22x, 22y within the second circle (80% diameter of the first circle) each range within limits of 70% (versus 50% in the prior art) and 100% of the first and/or second light intensity maximum, in more particular within limits of 72% and 100%, 74% and 100%, or 76% and 100%. Hence the first and second intensity profile 22x, 22y as provided by a light beam of a device of the invention is relatively uniform across the light output.

In the examples of Fig. 4 and 5 the light output of both, the device of the invention and the device of the prior art, were formed by a reference area defined by a first circle of a diameter D1 of 10 mm. The light output was formed by a planar free end of the light guide of the respective device. Further reference area corresponded to the total area of the light output of the respective device.

It has been found that a uniform light beam profile as provided by the device of the invention helps maximizing the reliability in use of the device for hardening a dental material in a tooth cavity

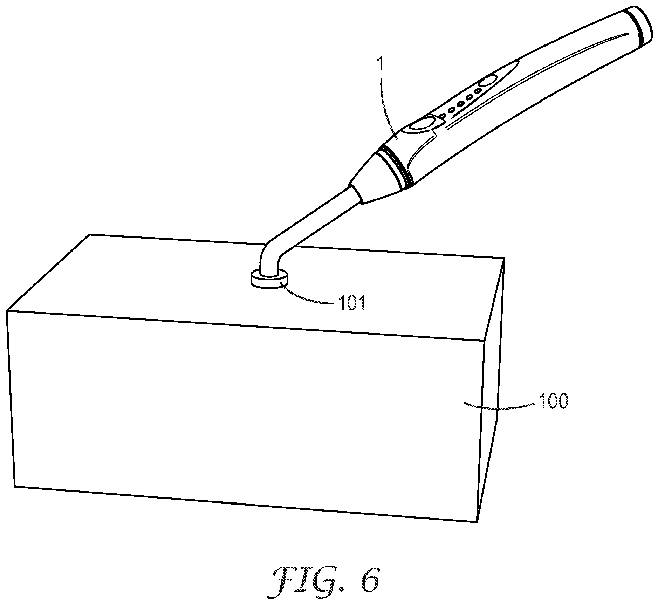

Such a reliability can be evaluated for example by a calibrator 100 as available under the designation "Marc Resin Calibrator™" from the company Blue Light Analytics Inc., as shown in Fig. 6.

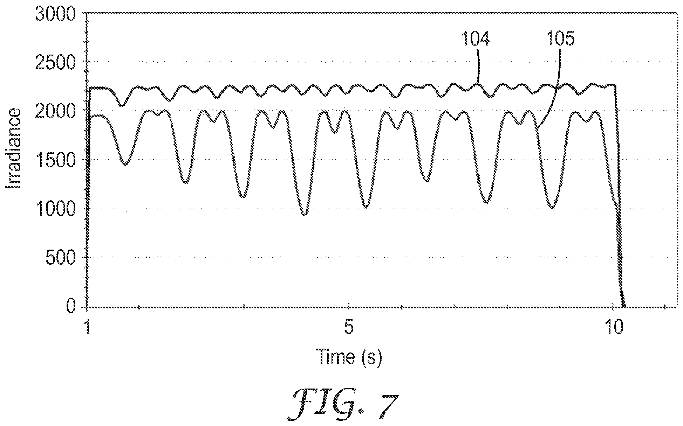

The calibrator 100 has a light sensor 101 for measuring the light intensity of light received by the sensor. The calibrator 100 is typically used to evaluate the light intensity which a light-hardenable dental material is exposed to if irradiated by a certain light irradiation device. In the example the light output of the device 1 was initially positioned with its center on the center of the light sensor 101 of the calibrator 100. The light output then was repeatedly moved from the initial center position by 4 mm per second in opposite directions, so that the light output was moved over strokes of 8 mm length about a center point of the sensor 101. This is to simulate approximately a movement of a light device during use for hardening a dental material in a patient's mouth. During such movement the variation of the intensity as received by the light sensor 101 was monitored over a period of 10 seconds and mapped in the diagram 102 shown in Fig. 7. The diagram 102 shows a first curve 104 illustrating the performance of a light irradiation device according to the invention, and a second curve 105 illustrating the performance of the light irradiation device according to the prior art as it is for example described in Figure 4. The variation of the intensity of the device according to the invention was lower compared to the variations of the device of the prior art. Therefore in use of a device according to the invention for hardening a dental material a movement of the device by the user relative to the dental material within the limits described substantially does not affect the hardening of the material. This is because the intensity of light which the material is exposed to is substantially uniform during normal movements of the device relative to the material.

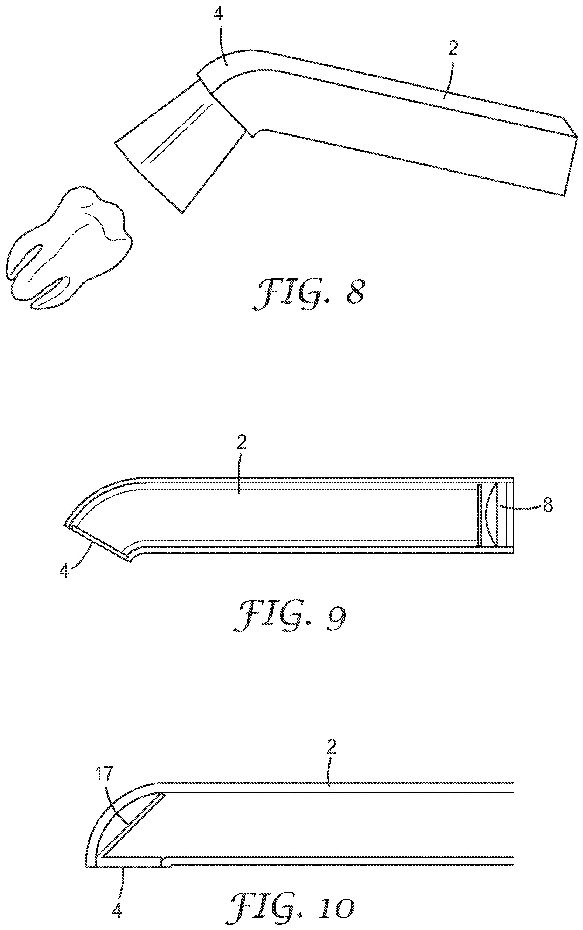

Fig. 8 shows a rectangular light guide 2 as it may be used in an embodiment of the invention. The light guide 2 at least at its light output 4 is preferably substantially dimensioned in cross-section in accordance with an average dimension of a human natural molar. In particular the total area of the light output side may be defined by a rectangle of between about 8 mm x about 8 mm and about 10 mm x about 10 mm. The light guide 2 may be formed of a plurality of transparent fibers merged to a solid structure as shown in Fig. 9. Further the light guide 2 may be formed of an inwardly mirrored hollow structure as illustrated in Fig. 10. A lens 8 may be integrated in the light guide 2 as shown in Fig. 9. In Fig. 9 the light guide 2 further has a mirror 17 for reflecting light toward the light output 4.

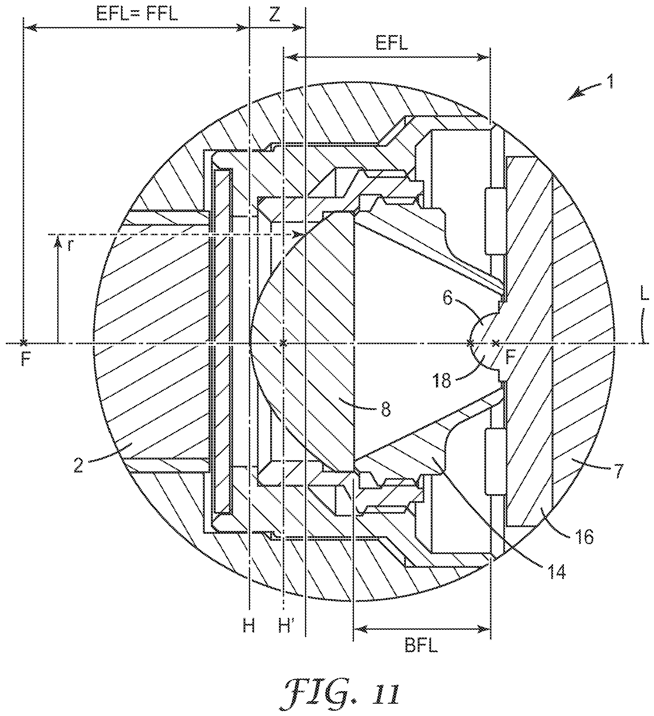

Fig. 11 shows a cross-sectional drawing of a portion of the device 1. The drawing illustrates the so-called front principle plane H and the rear principle plane H' of the plano-convex lens 8 in relation to the plano-convex lens 8. The rear principle plane H' is the principle plane positioned closer to the light source 6. In the example the front principle plane H forms a tangent on the convex side of the lens 8, whereas the rear principle plane H' is located between the convex side and the planar side of the lens 8. The convex side of the lens 8 in the example has an aspherical shape. The effective focal length EFL, meaning the distance between the rear principle plane H' and the rear focal point F' in the example is 7.8 mm. The distance between the front principle plane H and the front focal point F also corresponds to the effective focal length EFL, in the example 7.8 mm, as mentioned. The back focal length BFL, meaning the distance between the planar side of the lens 8 and the rear focal point F', in the example is 5.17 mm. Further the front focal length FFL, meaning the distance between the aspheric side of the lens 8 and the front focal point F, is equal to the effective focal length EFL. This is because the front principle plane H forms a tangent on the aspheric side of the lens 8. Further the center of the light source 6 is located on the rear focal point F'. In the example the center of the light source 6 further is located 5.7 mm relative to the printed circuit board on which the light source is attached.

The light source 6 is a high-power LED (not illustrated in detail), preferably only a single 8W high-power LED as for example available in an LED module under the designation DO BDL 8W OS from the company OSRAM, Germany. Such an LED module provides a peak wavelength at 450 nm (nanometers). The LED module is mounted on a PCB (Printed Circuit Board) 16 having a thickness of between about 1 mm to 2 mm, and that PCB is preferably mounted on a heat sink 7. The LED in the LED module is preferably covered by a transparent cover 18 which at least in the optical path of the light emitted or emittable from the LED is convexly dome-shaped for providing pre-collimation of the light emitted from the LED. In the example the LED module therefore has an angle of radiation of about 120 degrees (60 degrees toward opposite sides of the longitudinal axis L). Other LEDs may be used as for example available from companies like Cree Inc., Samsung Electronics GmbH, Philips N.V.

The lens 8 is oriented with its planar side toward the light source 6 and with the convex side of the lens 8 in a direction away from the light source 6 and toward the light guide 2.

Further the lens has a thickness (in a dimension between the convex and the planar side) of 5.8 mm $\pm$ 0.1 mm, and a diameter (in a dimension perpendicular to the thickness) of 10 mm - 0.1 mm. The shape (profile) of the aspheric side of the lens 8 used in the example is characterized as follows:

R = radius at lens vertex

k = conic constant

A = aspherical coefficients ($A_1$, $A_2$, $A_3$ $A_4$ ...)

r = variable radius relative to center axis of the lens (in the example longitudinal axis L)
z = sag (dependent from r) measure from the front principle plane H to the surface of the lens 8

The cross-sectional profile of the aspheric side of the lens can be determined according to the following formula and the parameters specified.

$$z(r) = \frac{r^2}{R\left(1 + \sqrt{1 - (1+k)\left(\frac{r}{R}\right)^2}\right)} + A_4 r^4$$

R = 4.0638 mm
k = -1
$A_4$ = 0.0003631265
r = 0 - 5 mm

The lens 8 of the example is made of a material which is available under the designation Liba 2000 from the company B & M Optik GmbH, Germany. Alternatively a material available under the designation B270 from Schott AG, Germany, or similar, may be used.

Further the lens 8 has an anti-reflection coating on the planar and the convex side to minimize reflections.

## Claims

1. A dental light irradiation device (1) being adapted to emit blue light, the device (1) comprising:

    - a light source (6),
    - means for collimating light emitted from the light source (6), the light collimating means comprising:

        - a plano-convex lens (8) oriented with the planar side toward the light source (6), and
        - a reflector (14) formed by a hollow ring-shaped structure having an inner conical and reflective surface,
        - the reflector (14) being arranged such that its inner cross-section widens toward the lens (8) and extending over the entire distance between the planar side of the lens (8) and the light source (6),

        - the light source (6) being positioned substantially at the effective focal length of the lens (8), and

- wherein the device (1) further comprises a light guide (2) having an input side for receiving light emitted from the light source and an output side for the light.

2. The device of claim 1, wherein a further reflective tube (15) is arranged between the light collimating means and the light guide (2).

3. The device of claim 1 or 2, wherein the light source (8) is a blue LED.

4. The device of claim 3, wherein the light source (8) is formed by a single high-power LED having an input power of between 6 W to 12 W.

5. The device of any of the preceding claims, wherein the convex side of the lens (8) is aspherical.

6. The device of any of the preceding claims, wherein the center of the light source (6) is positioned at the effective focal length of the lens (8).

7. The device of any of the preceding claims, further having a housing (3) which is closed by a transparent closure (13), wherein the reflective tube (15) extends along the entire distance between the convex side of the lens (8) and the closure (13).

8. The device of claim 7, wherein the housing (2) is adapted for detachably attaching the light guide (2).

9. The device of claim 8, wherein the light guide (2) and the housing (3) are attachable with each other by a magnetic coupling.

10. The device of any of the claims 7 to 9, wherein the housing (3) further hermetically encapsulates the light source (6), a battery for powering the light source (6) and a control unit for operating the light source (6) for a pre-selectable operating time and for automatically deactivating the light source (6) upon lapse of the operating time.

11. The device of any of the preceding claims, wherein the light guide (2) extends at least partially at a generally rectangular cross-section.

12. The device of any of the preceding claims, wherein the lens (8) has a thickness in a dimension between the convex and the planar side of 5.8 mm $\pm$ 0.1 mm, and a diameter in a dimension perpendicular to the thickness of 10 mm - 0.1 mm.

13. The device of any of the preceding claims, wherein the profile of the aspheric side of the lens is **characterized by** R = 4.18464 mm; k = -0.602689; $A_4$ = 0.00022; according to the formula:

$$z(r) = \frac{r^2}{R\left(1 + \sqrt{1 - (1+k)\left(\frac{r}{R}\right)^2}\right)} + A_4 r^4$$

and wherein r = 0 mm to 5 mm.

**Patentansprüche**

1. Dental-Lichtbestrahlungsvorrichtung (1), die ausgelegt ist, blaues Licht zu emittieren, wobei die Vorrichtung (1) umfasst:

    - eine Lichtquelle (6),
    - eine Einrichtung zum Bündeln von Licht, das aus der Lichtquelle (6) emittiert wird, wobei die Lichtbündelungseinrichtung umfasst:

        - eine plankonvexe Linse (8), die mit der planen Seite zur Lichtquelle (6) ausgerichtet ist, und
        - einen Reflektor (14), der aus einer hohlen ringförmigen Struktur mit einer konischen und reflektierenden Innenfläche gebildet ist,
        - wobei der Reflektor (14) so angeordnet ist, dass sein Innenquerschnitt zur Linse (8) hin weiter wird und sich über den gesamten Abstand zwischen der planen Seite der Linse (8) und der Lichtquelle (6) erstreckt,
        - wobei die Lichtquelle (6) im Wesentlichen an der effektiven Brennweite der Linse (8) positioniert ist, und
        - wobei die Vorrichtung (1) ferner einen Lichtleiter (2) mit einer Eingangsseite zum Empfangen von Licht, das aus der Lichtquelle emittiert wird, und einer Ausgangsseite für das Licht umfasst.

2. Vorrichtung nach Anspruch 1, wobei eine weitere reflektierende Röhre (15) zwischen der Lichtbündelungseinrichtung und dem Lichtleiter (2) angeordnet ist.

3. Vorrichtung nach Anspruch 1 oder 2, wobei die Lichtquelle (8) eine blaue LED ist.

4. Vorrichtung nach Anspruch 3, wobei die Lichtquelle (8) durch eine einzelne Hochleistungs-LED mit einer Eingangsleistung zwischen 6 W und 12 W gebildet ist.

5. Vorrichtung nach einem der vorangehenden Ansprüche, wobei die konvexe Seite der Linse (8) asphärisch ist.

6. Vorrichtung nach einem der vorangehenden Ansprüche, wobei die Mitte der Lichtquelle (6) an der effektiven Brennweite der Linse (8) positioniert ist.

7. Vorrichtung nach einem der vorangehenden Ansprüche, ferner ein Gehäuse (3) aufweisend, das durch einen transparenten Verschluss (13) verschlossen ist, wobei sich die reflektierende Röhre (15) entlang des gesamten Abstands zwischen der konvexen Seite der Linse (8) und dem Verschluss (13) erstreckt.

8. Vorrichtung nach Anspruch 7, wobei das Gehäuse (2) dafür ausgelegt ist, den Lichtleiter (2) abnehmbar zu befestigen.

9. Vorrichtung nach Anspruch 8, wobei der Lichtleiter (2) und das Gehäuse (3) durch magnetische Kopplung aneinander befestigt sind.

10. Vorrichtung nach einem der Ansprüche 7 bis 9, wobei das Gehäuse (3) ferner die Lichtquelle (6), eine Batterie zur Energieversorgung der Lichtquelle (6) und eine Steuereinheit zum Betreiben der Lichtquelle (6) für eine vorab wählbare Betriebszeit und zum automatischen Deaktivieren der Lichtquelle (6) nach Ablauf der Betriebszeit hermetisch einkapselt.

11. Vorrichtung nach einem der vorangehenden Ansprüche, wobei sich der Lichtleiter (2) zumindest zum Teil über einen allgemein rechtwinkligen Querschnitt erstreckt.

12. Vorrichtung nach einem der vorangehenden Ansprüche, wobei die Linse (8) eine Dicke in einer Dimension zwischen der konvexen und der planen Seite von 5,8 mm $\pm$ 0,1 mm und einen Durchmesser von 10 mm - 0,1 mm in einer Dimension, die senkrecht zur Dicke ist, aufweist.

13. Vorrichtung nach einem der vorangehenden Ansprüche, wobei das Profil der asphärischen Seite der Linse **gekennzeichnet ist durch** R = 4,18464 mm; k = -0,602689; A$_4$ = 0,00022; gemäß der Formel:

$$z(r) = \frac{r^2}{R\left(1 + \sqrt{1 - (1+k)\left(\frac{r}{R}\right)^2}\right)} + A_4 r^4$$

und wobei r = 0 mm bis 5 mm ist.

**Revendications**

1. Dispositif dentaire d'irradiation lumineuse (1) étant conçu pour émettre de la lumière bleue, le dispositif (1) comprenant :

- une source de lumière (6),
- des moyens pour collimater la lumière émise par la source lumineuse (6), les moyens de collimation de lumière comprenant :

  - une lentille plan-convexe (8) orientée avec la face plane en direction de la source de lumière (6), et
  - un réflecteur (14) formé par une structure creuse en forme d'anneau possédant une surface interne conique et réfléchissante,
  - le réflecteur (14) étant disposé de telle sorte que sa coupe transversale interne s'élargit en direction de la lentille (8) et s'étendant sur la distance entière entre la face plane de la lentille (8) et la source de lumière (6),
  - la source de lumière (6) étant positionnée essentiellement au niveau de la longueur focale efficace de la lentille (8), et
  - où le dispositif (1) comprend en outre un guide de lumière (2) possédant un côté d'entrée pour recevoir la lumière émise par la source lumineuse et un côté de sortie pour la lumière.

2. Dispositif selon la revendication 1, dans lequel un autre tube réfléchissant (15) est disposé entre le moyen de collimation de lumière et le guide de lumière (2).

3. Dispositif selon la revendication 1 ou 2, dans lequel la source de lumière (8) est une DEL bleue.

4. Dispositif selon la revendication 3, dans lequel la source de lumière (8) est formée par une DEL unique à puissance élevée possédant une puissance d'entrée comprise entre 6 W et 12 W.

5. Dispositif selon l'une quelconque des revendications précédentes, dans lequel la face convexe de la lentille (8) est asphérique.

6. Dispositif selon l'une quelconque des revendications précédentes, dans lequel le centre de la source de lumière (6) est positionné au niveau de la longueur focale efficace de la lentille (8).

7. Dispositif selon l'une quelconque des revendications précédentes, comportant en outre un logement (3) qui est fermé par une fermeture transparente (13), dans lequel le tube réfléchissant (15) s'étend le long de la distance entière entre la face convexe de la lentille (8) et la fermeture (13).

8. Dispositif selon la revendication 7, dans lequel le logement (2) est conçu pour fixer de façon détachable le guide de lumière (2).

**9.** Dispositif selon la revendication 8, dans lequel le guide de lumière (2) et le logement (3) peuvent être fixés l'un à l'autre par un couplage magnétique.

**10.** Dispositif selon l'une quelconque des revendications 7 à 9, dans lequel le logement (3) encapsule en outre hermétiquement la source de lumière (6), une batterie pour l'alimentation de la source de lumière (6) et une unité de commande pour faire fonctionner la source de lumière (6) pendant un temps de fonctionnement présélectionnable et pour la désactivation automatique de la source de lumière (6) lorsque le temps de fonctionnement est écoulé.

**11.** Dispositif selon l'une quelconque des revendications précédentes, dans lequel le guide de lumière (2) s'étend au moins partiellement au niveau d'une coupe transversale généralement rectangulaire.

**12.** Dispositif selon l'une quelconque des revendications précédentes, dans lequel la lentille (8) a une épaisseur dans une dimension entre la face convexe et la face plane de 5,8 mm $\pm$ 0,1 mm, et un diamètre dans une dimension perpendiculaire à l'épaisseur de 10 mm à 0,1 mm.

**13.** Dispositif selon l'une quelconque des revendications précédentes, dans lequel le profil de la face asphérique de la lentille est **caractérisé par** R = 4,18464 mm ; k = -0,602689 ; $A_4$ = 0,00022 ; selon la formule :

$$z(r) = \frac{r^2}{R\left(1 + \sqrt{1 - (1 + k)\left(\frac{r}{R}\right)^2}\right)} + A_4 r^4$$

et dans où r = 0 mm à 5 mm

*FIG. 1*

*FIG. 2*

*FIG. 3*

*FIG. 4*

*FIG. 5*

*FIG. 6*

*FIG. 7*

*FIG. 8*

*FIG. 9*

*FIG. 10*

$\mathcal{FIG}.\ 11$

**REFERENCES CITED IN THE DESCRIPTION**

**Patent documents cited in the description**

- EP 1457169 A1

- US 20040248059 A1